# FASCICULE DE BREVET EUROPEEN

(11) **EP 0 995 385 B1**
(45) Date de publication et mention de la délivrance du brevet: **05.03.2003**
(21) Numéro de dépôt: 99420212.5
(22) Date de dépôt: 22.10.1999
(51) Int. Cl.: A47J 27/04, A47J 43/07

(54) **Appareil électroménager de préperation culinaire, du type robot multi-usages.**
Elektrisches Haushaltsgerät zur Nahrungszubereitung in der Art einer Vielzweckküchenmaschine
Electric kitchen appliance of the kind of multi-use food processors

(30) Priorité: 22.10.1998 FR 9813391
(43) Date de publication de la demande: 26.04.2000
(73) Titulaire: SEB S.A., 69130 Ecully (FR)
(72) Inventeur: Dulout, Jean-Michel, 65120 Sazos (FR); Peyras, Lionel, 65100 Jarret (FR); Macabiau, Serge, 65100 Lourdes (FR)

(56) Documents cités:
- DE-A- 3 926 914
- FR-A- 2 501 031
- FR-A- 2 665 067
- FR-A- 2 743 710
- US-A- 5 794 524

## Description

La présente invention est relative à un appareil électroménager de préparation culinaire, du type robot multi-usages, comportant un récipient de travail muni d'une ouverture axiale et dont la section diminue progressivement de cette ouverture vers son fond, un outil de travail, solidaire d'un arbre d'entraînement et destiné à venir en prise avec un moteur d'entraînement et des moyens de liaison pour rendre ledit moteur angulairement solidaire dudit récipient de travail.

Les appareils de ce type sont en particulier destinés à la préparation d'aliments sous forme de purées, de bouillies ou de coulis notamment, bien que non exclusivement, pour l'alimentation des bébés. Les aliments préalablement cuits dans un autre récipient sont versés dans le récipient de travail et l'outil de travail sert à les réduire en purée. Il n'existe cependant pas d'appareil de ce type qui soit spécialement prévu pour cuire les aliments avant de les broyer.

On connaît déjà des robots du type susmentionné, notamment celui décrit dans le WO 97/26817.

Il a par ailleurs déjà été proposé des appareils de cuisson spécialement conçus pour permettre de cuire des aliments à la vapeur dans un four à micro-ondes. De tels appareils sont décrits notamment dans le FR - 2 501 031, dans le FR - 2 665 067, ainsi que dans le US - 5 558 798. Dans tous les cas, ces appareils comportent un récipient extérieur réalisé en un matériau transparent aux micro-ondes, dans lequel est placé un récipient intérieur de cuisson destiné à recevoir les aliments à cuire, un volume étant ménagé entre les deux récipients pour recevoir de l'eau destinée à être vaporisée. Des ouvertures servent à mettre les deux récipients en communication afin de permettre à la vapeur de pénétrer dans le récipient intérieur de cuisson. Dans ces appareils, le récipient intérieur de cuisson est réalisé en un matériau non transparent aux micro-ondes afin que les aliments ne cuisent qu'à la vapeur et non par les micro-ondes.

Pour garantir que la vapeur traverse effectivement le récipient intérieur de cuisson, il est nécessaire de l'empêcher de passer autour de lui, de sorte qu'une barrière doit être ménagée entre la zone présentant les ouvertures de communication et le compartiment dans lequel se trouve l'eau.

Dans le FR - 2 501 031, un épaulement est ménagé au bas de la paroi latérale du récipient externe, de manière que le fond perforé du récipient interne prenne appui contre cet épaulement. L'eau à vaporiser est disposée entre les fonds respectifs des deux récipients, de sorte que la vapeur est pratiquement obligée de passer à travers le fond perforé du récipient intérieur de cuisson.

Cet épaulement a pour effet de créer un brusque rétrécissement de la section du récipient extérieur, de sorte que lorsque celui-ci doit aussi servir de bol à diviser finement les aliments ou à les mélanger intimement, il crée un volume inaccessible à l'outil de coupe ou de mélange, surtout lorsque le fond du récipient extérieur comporte une partie saillante intérieurement pour recevoir l'extrémité de l'axe d'entraînement de l'outil de coupe. De ce fait, ce volume inaccessible à l'outil de coupe est un volume mort dans lequel les aliments sont hors de portée de cet outil et ne subissent par conséquent pas le traitement souhaité.

Outre une forme d'exécution semblable à celle du document précédent, il a été proposé dans le FR - 2 665 057 de former un rebord annulaire externe autour de l'ouverture axiale du récipient interne, permettant de suspendre ce récipient interne dans le récipient externe en appliquant ce rebord contre un rebord de l'ouverture du récipient externe, créant ainsi une barrière s'opposant à la circulation de la vapeur autour du récipient interne.

Une telle solution n'est pas utilisable dans le cas où le récipient externe sert à fixer angulairement un ensemble rotatif d'entraînement de l'outil de coupe, les moyens de fixation nécessaires empêchant d'avoir une surface d'appui continue apte à former une barrière s'opposant au passage de la vapeur.

De plus, dans tous les appareils de l'état de la technique susmentionnés, le récipient intérieur de cuisson est en un matériau non transparent aux micro-ondes, c'est-à-dire en métal. Dans le cas où l'on désire utiliser le même récipient pour cuire et pour diviser les aliments après cuisson, il est important que la paroi du récipient intérieur de cuisson ne soit pas portée à une température susceptible de créer des brûlures, puisque après cuisson, l'utilisateur de l'appareil doit transvaser les aliments cuits du récipient intérieur de cuisson dans le récipient externe.

Le fait de cuire les aliments simultanément par l'énergie des micro-ondes et par l'intermédiaire de la vapeur d'eau produite par cette même énergie, ne constitue pas un inconvénient, bien au contraire. En effet, si l'on désire obtenir la cuisson à coeur des aliments, le chauffage par micro-ondes peut provoquer leur déshydratation au moins partielle. La vapeur peut donc servir à la cuisson tout en empêchant ou en réduisant la déshydratation par une atmosphère saturée d'humidité.

La présente invention a pour but un robot ménager du type susmentionné, conçu de manière à ce que son récipient de travail permette de faire cuire les aliments dans un four à micro-ondes.

A cet effet, cette invention a pour objet un appareil électroménager de préparation culinaire selon les caractéristiques de la revendication 1.

Cet appareil permet donc successivement de cuire et de réduire les aliments cuits en purée, bouillie ou coulis.

De préférence, le couvercle comporte une jupe, un espace annulaire subsistant alors entre le bord de l'ouverture du récipient intérieur de cuisson et ladite jupe, afin de diriger une partie de l'eau de condensation entre les parois latérales des deux récipients vers la nervure saillante, ce qui permet d'améliorer l'étanchéité de la barrière de vapeur formée par ladite nervure.

De préférence la nervure saillante s'étend dans un plan perpendiculaire à l'axe central du récipient.

De préférence, la nervure saillante se situe au voisinage du fond du récipient intérieur de cuisson, une seconde nervure, parallèle à la première, s'étendant autour de la paroi latérale de ce récipient intérieur de cuisson et sert à maintenir la position de celui-ci sensiblement coaxiale à l'intérieur du récipient de travail.

Deux nervures parallèles épousant chacune sensiblement la section correspondante du récipient extérieur permettent d'assurer un positionnement respectif correct des deux récipients.

Avantageusement, pour améliorer l'étanchéité, un joint est monté sur la première nervure.

Avantageusement et pour faciliter le retrait du récipient intérieur de cuisson, celui-ci comporte une anse de préhension articulée entre deux positions, une position de préhension et une position escamotée.

Selon une forme préférée de l'invention, le fond du récipient de travail comporte en son centre une partie en relief, venue d'une pièce avec lui et conformée pour servir d'appui à l'extrémité de l'axe d'entraînement. Cette partie saillante permet de tenir l'axe d'entraînement par ses deux extrémités et permet de nettoyer facilement le récipient.

Avantageusement, le récipient intérieur de cuisson est en un matériau transparent aux micro-ondes. Grâce à cette disposition, on peut cuire à coeur les aliments sans provoquer leur dessèchement. On évite également que le récipient intérieur de cuisson n'atteigne une température à laquelle il pourrait provoquer des brûlures.

Selon une variante préférée de l'invention, les parois des deux récipients sont en au moins un matériau transparent à la lumière. Cette particularité présente l'avantage de permettre à l'utilisateur de voir l'état des aliments en cours de cuisson.

Selon une autre variante avantageuse de l'invention, les parois des deux récipients sont en au moins un matériau à faible conductivité thermique. Ceci permet à l'utilisateur de manipuler l'appareil après la cuisson sans risquer de se brûler à des parois chauffées par conduction de la chaleur provenant de l'eau et des aliments chauds qu'ils contiennent respectivement.

L'invention sera mieux comprise à l'étude d'une forme d'exécution de l'appareil objet de l'invention, décrite ci-après, à titre d'exemple nullement limitatif et illustrée schématiquement dans les figures annexées dans lesquelles :
- la figure 1a est une vue en élévation avec coupe partielle illustrant cette forme d'exécution avec l'assemblage d'éléments nécessaires à un premier mode d'utilisation, la figure 1b présentant un détail d'une variante de réalisation de la forme d'exécution présentée à la figure 1a,
- la figure 2 est une vue éclatée de l'appareil tourné de 90° autour de son axe central, moitié vu en élévation et moitié vu en coupe, montrant les éléments relatifs à un second mode d'utilisation,
- la figure 3 est une vue semblable à la figure 1a, mais à nouveau tournée de 90° pour se retrouver dans la position de la figure 1a, avec l'assemblage des éléments illustrés par la figure 2, nécessaires à ce second mode d'utilisation.

L'appareil selon la présente invention est spécialement conçu pour permettre successivement, de cuire des aliments au moins partiellement à la vapeur, puis de les diviser finement pour les réduire en purée ou en bouillie à l'aide d'un outil rotatif approprié, en utilisant le même récipient pour cuire à la vapeur et pour réduire les aliments en purée, bouillie ou coulis. Un tel appareil est utilisable en particulier, bien que non exclusivement pour la préparation de mets pour les bébés.

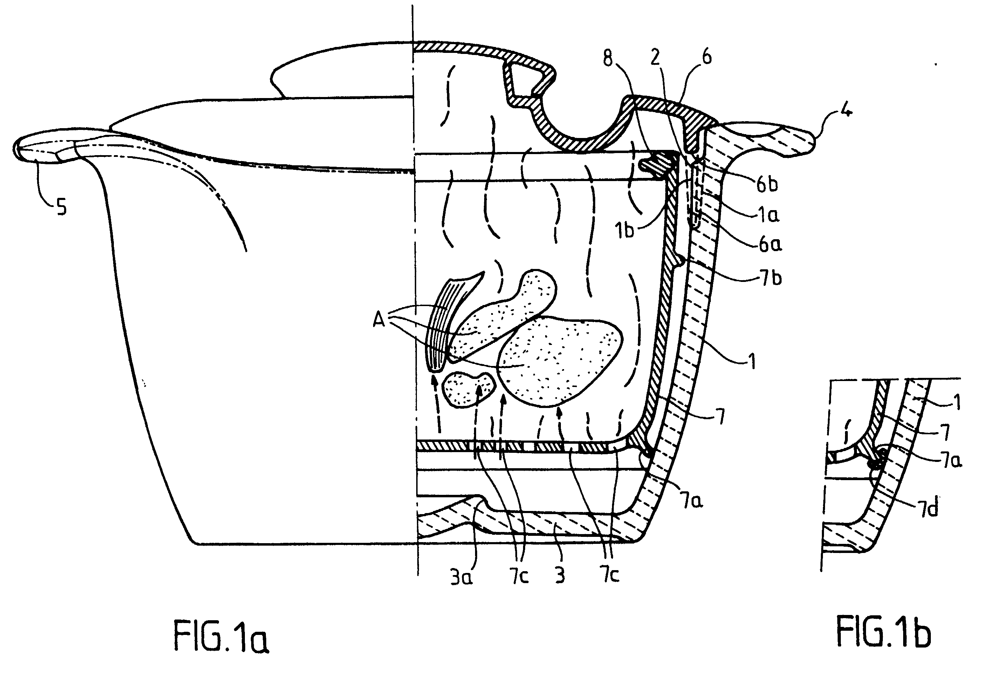

L'appareil illustré par la figure 1a comporte un récipient de travail extérieur 1 de forme circulaire, muni d'une ouverture axiale 2 et dont la section diminue progressivement en allant de cette ouverture 2 vers le fond 3 de ce récipient de travail 1. Deux poignées 4 et 5, symétriques par rapport à un plan contenant l'axe de révolution du récipient de travail 1, servent à le tenir et à le transporter.

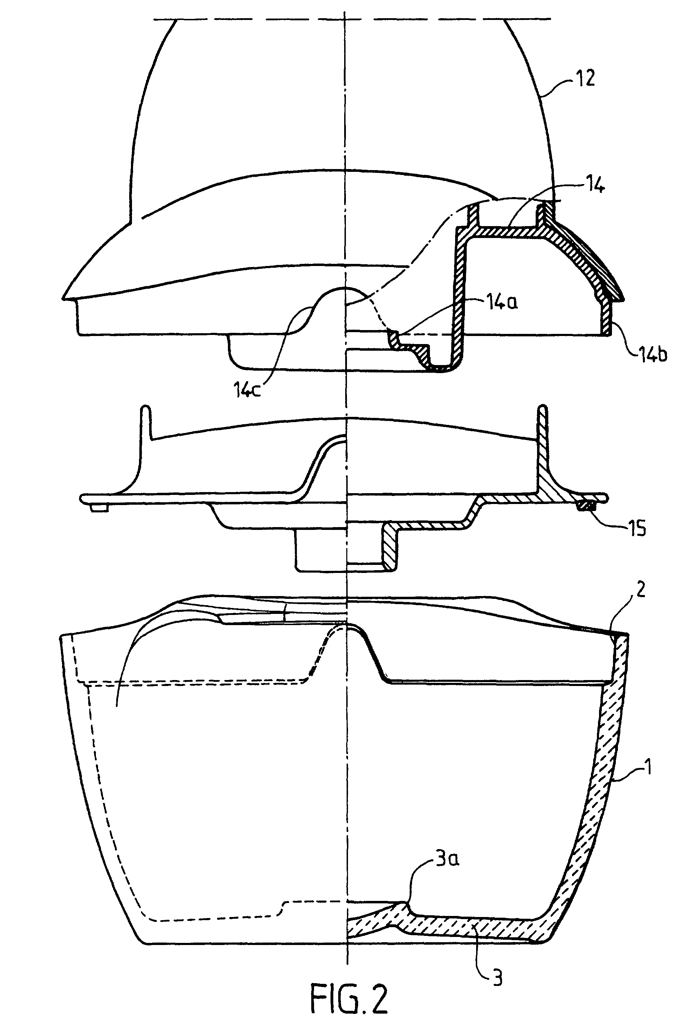

Comme on le voit plus particulièrement sur la figure 2, l'épaisseur de la paroi du récipient de travail 1 s'amincit brusquement à une certaine distance du bord de son ouverture axiale 2, ménageant ainsi un rebord annulaire 1a. Deux protubérances de positionnement 1b diamétralement opposées s'étendent en direction du bord de l'ouverture axiale 2.

Dans le premier mode d'utilisation de l'appareil illustré par la figure 1a, l'ouverture axiale 2 du récipient de travail 1 est fermée par un couvercle 6 qui comporte une jupe cylindrique 6a munie d'échancrures 6b de formes complémentaires aux protubérances de positionnement 1b du rebord annulaire 1a de ce récipient de travail 1. Cette jupe cylindrique 6a et ses échancrures 6b peuvent donc s'emboîter sur le rebord annulaire 1a en épousant la forme de ses protubérances de positionnement 1b. Une fois emboîté sur ce rebord annulaire 1a, le couvercle 6 ne peut donc pas tourner par rapport au récipient de travail 1.

Un récipient intérieur de cuisson 7 est logé dans le récipient de travail 1 qui est, de préférence, réalisé comme le récipient de travail 1, en un matériau transparent à la fois aux micro-ondes et aux rayons lumineux tel que le polycarbonate. De plus ce matériau est mauvais conducteur de chaleur. Ce récipient intérieur de cuisson 7 présente sensiblement la même forme que le récipient de travail 1, mais à une échelle réduite. Son fond est traversé par une pluralité de perforations 7c destinées à permettre une circulation de vapeur de cuisson comme on l'expliquera par la suite. Une saillie annulaire 7a est ménagée au niveau du fond de ce récipient intérieur de cuisson 7. La dimension de cette saillie 7a correspond à une section intermédiaire du récipient de travail 1, de sorte qu'elle permet de maintenir le fond du récipient intérieur de cuisson 7 à une certaine distance au-dessus du fond 3 du récipient de travail 1. Le volume ainsi ménagé est choisi pour permettre de recevoir la quantité d'eau nécessaire à la cuisson des aliments A, par la vapeur produite par le chauffage de cette eau. Cette saillie annulaire 7a a également comme fonction de créer une barrière destinée à empêcher la circulation de la vapeur entre les parois latérales des deux récipients 1 et 7, l'obligeant ainsi à passer à travers le récipient intérieur de cuisson 7 dans lequel se trouvent les aliments A à cuire.

La saillie annulaire 7a seule ne permettrait cependant pas de garantir que le récipient intérieur de cuisson 7 est correctement disposé coaxialement à l'intérieur du récipient de travail 1, c'est-à-dire que son fond à perforations 7c est pratiquement parallèle au fond 3 du récipient de travail, de sorte que l'eau placée entre les fonds respectifs du récipient de travail 1 et du récipient intérieur de cuisson 7, ne pénètre pas dans ce dernier afin de ne pas venir en contact avec les aliments pour permettre leur cuisson à la vapeur et de préférence aux micro-ondes, mais non à l'eau. C'est la raison pour laquelle, de préférence, une seconde saillie annulaire 7b est ménagée autour du récipient intérieur de cuisson 7. Cette seconde saillie annulaire 7b est située parallèlement et au-dessus de la saillie annulaire 7a et, de préférence, elle ne touche pas tout à fait la paroi latérale du récipient externe 1 pour ne pas interférer avec la saillie 7a qui elle, doit être en contact avec cette paroi pour former la barrière s'opposant au passage de la vapeur.

Le récipient intérieur de cuisson 7 peut encore comporter une anse escamotable 8 pour faciliter son enlèvement du récipient de travail 1 après la cuisson. Cette anse 8 est, de préférence également en un matériau mauvais conducteur thermique. Elle est articulée au récipient intérieur 7 afin de pouvoir occuper deux positions, l'une relevée, l'autre escamotée, comme illustré par la figure 1.

Comme on peut le constater sur cette figure 1a, un espace annulaire subsiste entre le bord de l'ouverture du récipient intérieur de cuisson 7 et la jupe 6a du couvercle 6, de sorte que lorsque la vapeur rencontre les parois plus froides du récipient de travail 1 et se condense, elle peut s'écouler entre les parois latérales respectives du récipient de travail 1 et du récipient intérieur de cuisson 7. Ce condensât peut alors s'écouler jusqu'à la nervure annulaire 7a, qui elle est en contact avec la paroi du récipient de travail 1 et s'accumuler au-dessus de celle-ci. Cette accumulation de condensât permet également d'améliorer l'étanchéité de la barrière de vapeur formée par la nervure annulaire 7a.

A titre de variante, un joint 7d peut être monté sur la nervure annulaire 7a, tel que montré à la figure 1b.

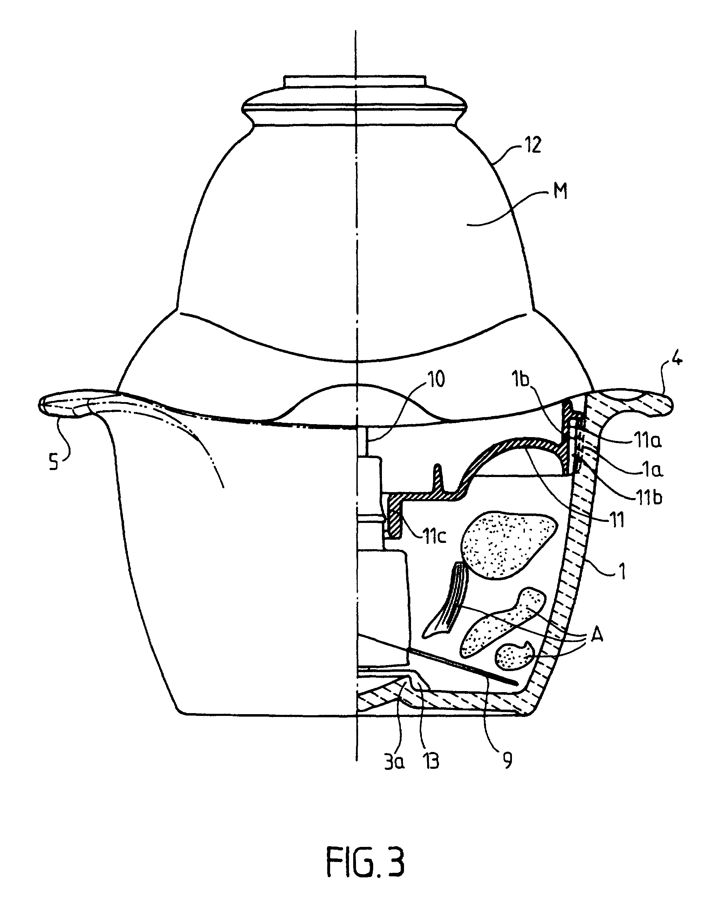

Sur les figures 2 et 3, on retrouve le même récipient de travail 1, mais sans le récipient intérieur de cuisson 7 qui a été enlevé pour permettre de mettre en place un outil de travail 9, notamment un outil de coupe pour diviser les aliments A. Cet outil de coupe 9 est solidaire d'une extrémité d'un arbre d'entraînement 10 dont l'autre extrémité vient en prise avec un moteur d'entraînement M logé dans un carter 12. L'extrémité libre de l'arbre d'entraînement 10 portant cet outil de coupe 9 se termine par un organe d'appui 13 présentant la forme d'une cuvette renversée dont le bord vient en prise avec un élément de centrage formé par une portion en relief 3a ménagée sur le fond 3 du récipient de travail. Une cloison 11 est destinée à séparer le moteur M logé dans le carter 12 du récipient de travail 1, afin de protéger le moteur M du contenu du récipient de travail 1 et en particulier des éclaboussures résultant du mixage des aliments A par l'outil de coupe 9.

Cette cloison 11 comporte, à sa périphérie, un anneau plat extérieur 11a présentant deux parties incurvées 11b destinées à s'emboîter sur les protubérances de positionnement 1b du rebord 1a du récipient de travail 1. Une ouverture axiale 11c traverse le centre de la cloison 11 afin de permettre le passage de l'arbre d'entraînement 10 entre le moteur M et l'outil de coupe 9. De préférence, un joint 15 est disposé entre d'une part, l'anneau plat 11a et ses parties incurvées 11b et, d'autre part, le rebord 1a et les protubérances de positionnement 1b du récipient de travail 1, afin d'empêcher que du liquide sorte de ce récipient pendant l'opération de mixage des aliments.

Comme on le voit plus particulièrement sur la vue éclatée de la figure 2, le carter 12 est fermé par une paroi profilée 14 destinée à permettre le positionnement et la fixation du moteur M, ainsi qu'à fermer le carter 12. Etant donné que ce positionnement et cette fixation du moteur M sortent du cadre de la présente invention et ne sont donc pas nécessaires à sa compréhension, ils ne sont par conséquent ni décrits ni représentés. Cette paroi profilée 14 présente une ouverture axiale 14a pour le passage de l'arbre d'entraînement 10 et un bord en forme de jupe cylindrique 14b dimensionnée pour s'emboîter sur le rebord 1a du récipient 1. A cet effet, cette jupe cylindrique 14b présente deux échancrures 14c diamétralement opposées, conformées pour s'emboîter sur les parties incurvées 11b de la cloison 11, elles-mêmes emboîtées sur les protubérances de positionnement 1b du récipient de travail 1. Par conséquent, le carter 12 et le moteur M sont ainsi solidaires angulairement du récipient de travail 1.

Le récipient de travail 1 est nécessairement en un matériau transparent aux micro-ondes, notamment en verre ou en polycarbonate qui permet en plus de voir au travers. Comme on l'a déjà mentionné, le récipient intérieur de cuisson 7 est, de préférence, aussi en matériau transparent aux micro-ondes et il peut avantageusement aussi être en polycarbonate, de sorte que l'opérateur peut voir ce qui cuit à l'intérieur de l'appareil à travers les parois des deux récipients 1 et 7. On pourrait aussi utiliser le polypropylène, plus économique, mais on perdrait l'avantage de voir le contenu du récipient en cours de cuisson.

L'appareil électroménager selon l'invention dont on vient de décrire la structure s'utilise de la façon suivante :

On commence par mettre dans le récipient de travail 1 la quantité d'eau nécessaire à la cuisson des aliments. Cette quantité se situe, dans l'exemple décrit, entre 90 et 150 ml. On met le récipient intérieur de cuisson 7 dans le récipient de travail 1, comme illustré par la figure 1a et on verse les aliments à cuire dedans. On ferme le récipient de travail 1 avec le couvercle 6 et on place le tout dans un four à micro-ondes. Le temps de cuisson se situe entre 4 et 8 min., avec une puissance de 750W.

On retire l'appareil de cuisson du four, on l'ouvre et on sort le récipient intérieur de cuisson 7 avec les aliments cuits qui s'y trouvent. Etant donné que, de préférence, le récipient intérieur de cuisson 7 est en un matériau transparent aux micro-ondes, celui-ci n'est pas chauffé au cours de la cuisson. De préférence également, ce récipient intérieur de cuisson 7 est en un matériau transparent aux rayons lumineux comme le récipient de travail 1, tel que le polycarbonate qui est également mauvais conducteur de la chaleur, de sorte que ses parois ne sont pas ou peu chauffées par conduction par la chaleur des aliments qui ont cuit.

On met en place l'outil de coupe 9 avec son arbre d'entraînement 10 dans le récipient de travail 1, en laissant le liquide qui s'y trouve. On verse ensuite les aliments dans le fond du récipient de travail 1. On emboîte la cloison 11 dans l'ouverture 2 du récipient de travail 1 et on met en place le carter 12 comme illustré par la figure 3. Celui-ci est rendu solidaire angulairement du récipient de travail 1 par l'intermédiaire de la cloison 11 et de ses parties incurvées 11b, d'une part emboîtées sur les protubérances de positionnement 1a du récipient de travail 1 et sur lesquelles s'emboîtent, d'autre part, les échancrures 14c de la jupe cylindrique 14b de la paroi 14 fermant le carter 12 .

L'appareil est alors prêt pour mixer les aliments A cuits précédemment durant le temps nécessaire, qui se situe généralement entre 20 et 60 secondes suivant la recette.

Après mixage, il suffit alors de retirer axialement le carter 12, la cloison 11 et l'arbre d'entraînement 10 portant l'outil de coupe 9 pour permettre de servir le met ainsi préparé.

## Revendications

1. Appareil électroménager de préparation culinaire, du type robot multi-usages, comportant un récipient de travail (1) muni d'une ouverture axiale (2) et dont la section diminue progressivement de cette ouverture (2) vers son fond (3), comportant un récipient intérieur de cuisson (7) à fond perforé, autour d'une portion de la paroi latérale duquel s'étend une nervure saillante (7a), la dimension exteme de cette nervure saillante (7a) correspondant à celle d'une section intermédiaire dudit récipient de travail (1) pour qu'en appui contre la paroi latérale de celui-ci, cette nervure saillante (7a) forme une barrière au passage de la vapeur et maintienne les parois du récipient intérieur de cuisson (7) à distance des parois homologues dudit récipient de travail (1), l'espace entre les fonds respectifs desdits récipients (1, 7) étant choisi pour ménager un volume apte à recevoir la quantité d'eau nécessaire à la cuisson des aliments, un couvercle (6) servant à fermer ladite ouverture axiale (2) en ménageant un espace avec le bord de l'ouverture axiale du récipient intérieur de cuisson (7), au moins ledit récipient de travail (1) étant en un matériau transparent aux micro-ondes, **caractérisé en ce qu'**il comporte, de plus et en substitution au récipient intérieur de cuisson (7) et au couvercle (6), un outil de travail (9), solidaire d'un arbre d'entraînement (10) et destiné à venir en prise avec un moteur d'entraînement (M) et des moyens de liaison pour rendre ledit moteur angulairement solidaire dudit récipient de travail (1).

2. Appareil électroménager selon la revendication 1, **caractérisé en ce que** le couvercle (6) comporte une jupe (6a), un espace annulaire subsistant entre le bord de l'ouverture du récipient intérieur de cuisson (7) et ladite jupe.

3. Appareil électroménager selon l'une des revendications précédentes, **caractérisé en ce que** la nervure saillante (7a) s'étend dans un plan perpendiculaire à l'axe central du récipient.

4. Appareil électroménager selon l'une des revendications précédentes, **caractérisé en ce que** la nervure saillante (7a) se situe au voisinage du fond dudit récipient intérieur de cuisson (7), une seconde nervure (7b), parallèle à la première, s'étendant autour de la paroi latérale de ce récipient intérieur de cuisson (7) et sert à maintenir la position de celui-ci sensiblement coaxiale à l'intérieur dudit récipient de travail (1).

5. Appareil électroménager selon l'une des revendications précédentes, **caractérisé en ce qu'**un joint (7d) est monté sur la première nervure (7a).

6. Appareil électroménager selon l'une des revendications précédentes, **caractérisé en ce que** ledit récipient intérieur de cuisson (7) comporte une anse de préhension (8) articulée entre deux positions, une position de préhension et une position escamotée.

7. Appareil électroménager selon l'une des revendications précédentes, **caractérisé en ce que** le fond (3) dudit récipient de travail (1) comporte en son centre une partie en relief (3a), venue d'une pièce avec lui et conformée pour servir d'appui à l'extrémité dudit axe d'entraînement (10).

8. Appareil électroménager selon l'une des revendications précédentes, **caractérisé en ce que** ledit récipient intérieur de cuisson (7) est en un matériau transparent aux micro-ondes.

9. Appareil selon l'une des revendications précédentes, **caractérisé en ce que** les parois des deux récipients (1, 7) sont en au moins un matériau transparent à la lumière.

10. Appareil selon l'une des revendications précédentes, **caractérisé en ce que** les parois des deux récipients (1, 7) sont en au moins un matériau à faible conductivité thermique.

## Claims

1. A household electric utensil for preparing food, which utensil is of the multipurpose food processor type including a work receptacle (1) provided with an axial opening (2) and of cross section that tapers going from said opening (2) to the bottom (3) of the receptacle, including a cooking inner receptacle (7) having a perforated bottom, and around a portion of the side wall of which a projecting rib (7a) extends, the outside dimension of the projecting rib (7a) corresponding to the inside dimension of an intermediate section of said work receptacle (1) so that, when said projecting rib (7a) abuts against the side wall of said work receptacle, said rib forms a barrier preventing steam from passing through and maintains the walls of the cooking inner receptacle (7) at a distance from the corresponding walls of said work receptacle (1), the space between the respective bottoms of said receptacles (1, 7) being chosen to provide a volume suitable for receiving the quantity of water necessary to cook the food, a lid (6) serving to close said axial opening (2) while leaving a space between it and the edge of the axial opening of the cooking inner receptacle (7), at least said work receptacle (1) being made of a material transparent to microwaves, said household electric utensil being **characterized in that** it further includes, as a substitute to the cooking inner receptacle (7) and the lid (6), a work tool (9) secured to a drive shaft (10) and designed to engage with a drive motor (M), and coupling means for preventing said motor from moving angularly relative to said work receptacle (1).

2. A household electric utensil according to claim 1, **characterized in that** the lid (6) is provided with a skirt (6a), an annular space remaining between the edge of the opening of the cooking inner receptacle (7) and said skirt.

3. A household electric utensil according to any preceding claim, **characterized in that** the projecting rib (7a) extends in a plane perpendicular to the central axis of the receptacle.

4. A household electric utensil according to any preceding claim, **characterized in that** the projecting rib (7a) is situated in the vicinity of the bottom of said cooking inner receptacle (7), a second rib (7b) parallel to the first rib extending around the side wall of the cooking inner receptacle (7) and serving to maintain the position of said inner receptacle substantially coaxial inside said work receptacle (1).

5. A household electric utensil according to any preceding claim, **characterized in that** a gasket (7d) is mounted on the first rib (7a).

6. A household electric utensil according to any preceding claim, **characterized in that** said cooking inner receptacle (7) is provided with a carrying handle (8) hinged between two positions, namely a carrying position and a retracted position.

7. A household electric utensil according to any preceding claim, **characterized in that** the bottom (3) of said work receptacle (1) is provided, at its center, with a portion in relief (3a) that is integrally molded with it and that is shaped to serve as an abutment for the end of said drive shaft (10).

8. A household electric utensil according to any preceding claim, **characterized in that** said cooking inner receptacle (7) is made of a material that is transparent to microwaves.

9. A household electric utensil according to any preceding claim, **characterized in that** the walls of both receptacles (1, 7) are made of a material that is transparent to light.

10. A household electric utensil according to any preceding claim, **characterized in that** the walls of both receptacles (1, 7) are made of a material that is a poor conductor of heat.

## Patentansprüche

1. Elektrohaushaltsgerät zur Kochzubereitung des Typs Mehrzweck-Küchenmaschine mit einem Arbeitsbehälter (1), der mit einer axialen Öffnung (2) versehen ist und dessen Querschnitt fortschreitend von dieser Öffnung (2) zu seinem Boden (3) abnimmt, mit einem inneren Kochbehälter (7) mit einem durchlöcherten Boden, wobei sich um einen Teil von dessen Seitenwand eine vorspringende Rippe (7a) erstreckt, wobei die äußere Abmessung dieser vorspringenden Rippe (7a) jener eines Zwischenquerschnitts des Arbeitsbehälters (1) entspricht, damit diese vorspringende Rippe (7a) an der Seitenwand von diesem anliegend eine Barriere für den Durchgang des Dampfs bildet und die Wände des inneren Kochbehälters (7) in einem Abstand von den homologen Wänden des Arbeitsbehälters (1) hält, wobei der Raum zwischen den jeweiligen Böden der Behälter (1, 7) gewählt ist, um ein Volumen zu schaffen, das die Menge an Wasser aufnehmen kann, die für das Kochen der Nahrungsmittel erforderlich ist, wobei ein Deckel (6) zum Schließen der axialen Öffnung (2) dient, indem mit dem Rand der axialen Öffnung des inneren Kochbehälters (7) ein Raum geschaffen wird, wobei zumindest der Arbeitsbehälter (1) aus einem für Mikrowellen durchlässigen Material besteht, **dadurch gekennzeichnet, daß** es außerdem und im Austausch gegen den inneren Kochbehälter (7) und den Deckel (6) ein Arbeitswerkzeug (9) umfaßt, das mit einer Antriebswelle (10) fest verbunden ist und vorgesehen ist, mit einem Antriebsmotor (M) und Verbindungsmitteln in Eingriff zu kommen, um den Motor in einem Winkel fest mit dem Arbeitsbehälter (1) zu verbinden.

2. Elektrohaushaltsgerät nach Anspruch 1, **dadurch gekennzeichnet, daß** der Deckel (6) eine Schürze (6a) umfaßt, wobei ein ringförmiger Raum zwischen dem Rand der Öffnung des inneren Kochbehälters (7) und dem Mantel bleibt.

3. Elektrohaushaltsgerät nach einem der vorangehenden Ansprüche, **dadurch gekennzeichnet, daß** die vorspringende Rippe (7a) sich in einer zur Mittelachse des Behälters senkrechten Ebene erstreckt.

4. Elektrohaushaltsgerät nach einem der vorangehenden Ansprüche, **dadurch gekennzeichnet, daß** sich die vorspringende Rippe (7a) in der Nähe des Bodens des inneren Kochbehälters (7) befindet, wobei sich eine zweite Rippe (7b), die zur ersten parallel ist, um die Seitenwand dieses inneren Kochbehälters (7) erstreckt und dazu dient, die Position von diesem im wesentlichen koaxial zum Inneren des Arbeitsbehälters (1) zu halten.

5. Elektrohaushaltsgerät nach einem der vorangehenden Ansprüche, **dadurch gekennzeichnet, daß** eine Dichtung (7d) an der ersten Rippe (7a) angebracht ist.

6. Elektrohaushaltsgerät nach einem der vorangehenden Ansprüche, **dadurch gekennzeichnet, daß** der innere Kochbehälter (7) einen Griffbügel (8) umfaßt, der zwischen zwei Positionen, einer Griffposition und einer eingezogenen Position, angelenkt ist.

7. Elektrohaushaltsgerät nach einem der vorangehenden Ansprüche, **dadurch gekennzeichnet, daß** der Boden (3) des Arbeitsbehälters (1) in seiner Mitte einen erhabenen Teil (3a) aufweist, der aus einem Stück mit diesem ausgebildet und dafür vorgesehen ist, als Abstützung für das Ende der Antriebsachse (10) zu dienen.

8. Elektrohaushaltsgerät nach einem der vorangehenden Ansprüche, **dadurch gekennzeichnet, daß** der innere Kochbehälter (7) aus einem für Mikrowellen durchlässigen Material besteht.

9. Gerät nach einem der vorangehenden Ansprüche, **dadurch gekennzeichnet, daß** die Wände der zwei Behälter (1, 7) aus zumindest einem lichtdurchlässigen Material bestehen.

10. Gerät nach einem der vorangehenden Ansprüche, **dadurch gekennzeichnet, daß** die Wände der zwei Behälter (1, 7) aus zumindest einem Material mit geringer Wärmeleitfähigkeit bestehen.
